# EUROPEAN PATENT SPECIFICATION

(11) **EP 4 199 164 B1**
(45) Date of publication and mention of the grant of the patent: **21.05.2025**
(21) Application number: 22833527.9
(22) Date of filing: 27.06.2022
(51) Int. Cl.: H01M 10/04, H05B 3/00, H01M 10/0585, H05B 1/02

(54) **SECONDARY BATTERY LAMINATION DEVICE USING INFRARED LAMPS**
LAMINIERVORRICHTUNG FÜR SEKUNDÄRBATTERIE MIT INFRAROTLAMPEN
DISPOSITIF DE STRATIFICATION DE BATTERIE SECONDAIRE UTILISANT DES LAMPES INFRAROUGES

(30) Priority: 29.06.2021 KR 20210085047; 24.06.2022 KR 20220077548
(43) Date of publication of application: 21.06.2023
(73) Proprietor: LG Energy Solution, Ltd., Seoul 07335 (KR)
(72) Inventor: SO, Heeyoung, Daejeon 34122 (KR); LEE, Jin Soo, Daejeon 34122 (KR); LEE, Youngsoo, Daejeon 34122 (KR); HWANG, Hong Ju, Daejeon 34122 (KR); HWANG, Taemin, Daejeon 34122 (KR); KEUM, Dongyeon, Daejeon 34122 (KR)
(74) Representative: Goddar, Heinz J.
(86) International application number: PCT/KR2022/009092
(87) International publication number: WO 2023/277471

(56) References cited:
- WO-A1-2020/180028
- JP-A- 2012 146 850
- JP-A- H11 339 783
- JP-A- H11 339 783
- KR-A- 20070 092 385
- KR-A- 20070 092 385
- KR-A- 20150 037 227
- KR-A- 20190 019 828
- KR-A- 20190 131 795
- US-A1- 2019 229 324

## Description

### [Technical Field]

This application claims the benefits of priorities based on Korean Patent Application No. 2021-0085047 filed on June 29, 2021 and Korean Patent Application No. 2022-0077548 filed on June 24, 2022.

One aspect of the present disclosure relates to a secondary battery lamination device using infrared lamps.

### [Background Art]

The secondary battery can be classified in various ways according to the structure of the electrode assembly. As an example, the secondary battery may be classified into a stack type structure, a winding type (jelly roll type) structure, or a stack/folding type structure. However, in the stack type structure, since the electrode units (positive electrode, separator and negative electrode) constituting the electrode assembly are stacked separately from each other, not only it is very difficult to precisely align the electrode assembly, but also there is a disadvantage that a very large number of processes are required to produce the electrode assembly.

WO 2020/180028 A1 discloses a cell manufacturing device comprising: a center electrode reel from which a center electrode is unwound; a first heater which applies radiant heat to the unwound center electrode; an upper separator reel from which an upper separator to be laminated on the top surface of the center electrode is unwound; a lower separator reel from which a lower separator to be laminated on the bottom surface of the center electrode is unwound; an upper electrode reel from which an upper electrode to be laminated on the top surface of the upper separator is unwound; and a second heater which applies radiant heat to the unwound upper electrode.

Japanese Publication Patent Application No. 2012-146850 discloses an apparatus for manufacturing an electrode by forming an active material layer on both sides of a belt-typed substrate, wherein a drying portion including a plurality of LEDs (Light Emitting Diodes) emitting infrared light is provided, and a component capable of performing the pressurizing process is provided between the unwinding roll and the winding roll, so that the electrode is manufactured through the pressurizing process after drying. In the above patent, since an electrode lamination is performed only by simple pressurization, the quality of the manufactured electrode may be deteriorated.

Therefore, it is required to develop a technology that can improve the quality of the product as well as process efficiency by performing lamination more efficiently during the electrode manufacturing process.

### [Prior Art Document]

### [Patent Document]

(Patent Document 1) Japanese Publication Patent Application No. 2012-146850

### [Disclosure]

### [Technical Problem]

The inventors of one aspect of the present disclosure have conducted various studies to solve the above problems, and as a result, have confirmed that when heat is applied using an infrared LED heat source portion that includes a plurality of infrared LED lamps with individually controllable output during the lamination process of the electrode laminate using heat and pressure, the adhesive strength and air permeability of the electrode can be made more uniformly, which can improve the reliability of the quality of the electrode.

Accordingly, it is an object of the present invention to provide a secondary battery lamination device using infrared lamps.

### [Technical Solution]

In order to achieve the above purpose, the invention provides a secondary battery lamination device according to claim 1. Preferred embodiments are defined in the dependent claims.

### [Advantageous Effects]

Since the secondary battery lamination device using the infrared lamp according to the present invention can individually control the output of a plurality of infrared LED lamps comprised in the infrared LED heat source portion, it can improve the quality of the electrode and the process efficiency, by making uniform the adhesive strength and air permeability between each layer comprised in the secondary battery manufactured by the lamination process.

In addition, the infrared LED heat source portion can improve the lamination efficiency of the electrode laminate by a relatively short heat source portion compared to a heat source portion in which a general heater is installed, thereby reducing the equipment cost.

In addition, the infrared LED lamp comprised in the infrared LED heat source portion is easy to replace and has a long usage period, thereby improving the process efficiency and reducing the equipment cost.

### [Description of Drawings]

FIG. 1 shows a schematic diagram of a longitudinal cross-section of the secondary battery lamination device according to an embodiment of the present invention.
FIGS. 2A to 2C are schematic diagrams showing the structure of the infrared LED heat source portion according to an embodiment of the present invention and the arrangement form of the LED lamps contained in the inside thereof.
FIG. 3 is a schematic diagram of a longitudinal cross-section of the secondary battery lamination device according to another embodiment of the present invention.
FIG. 4 is a schematic diagram in which a temperature sensor is connected to the positive electrode comprised in the laminate manufactured by the secondary battery lamination device according to another embodiment of the present invention.

### [Best Model

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his/her invention in the best way possible.

As used herein, the term "secondary battery lamination device" refers to a device for a lamination process that bonds laminates, which are formed by sequentially stacking a positive electrode, a separator, and a negative electrode, to each other, when manufacturing a secondary battery comprising the positive electrode, the separator and the negative electrode.

As used herein, the term "laminate" refers to a structure in which a positive electrode, a separator, and a negative electrode are simply stacked.

As used herein, the term "lamination" means that a positive electrode, a separator, and a negative electrode comprised in the laminate are bonded by heat and pressure.

As used herein, the term "infrared LED heat source portion" refers to a member comprising a plurality of infrared LED lamps emitting infrared.

### Secondary battery lamination device using infrared LED lamp

One aspect of the present disclosure relates to a secondary battery lamination device using infrared LED lamps, comprising a laminate moving portion for moving a laminate formed by sequentially stacking a positive electrode, a separator and a negative electrode in one direction; an infrared LED (Light-Emitting Diode) heat source portion which is positioned on one side and/or the other side of the laminate moving portion and supplies infrared light to the laminate to bond the positive electrode, the separator and the negative electrode; and a pressurizing portion for pressurizing the laminate bonded by the infrared LED heat source portion while passing through the laminate moving portion.

If infrared light is supplied from the infrared LED heat source portion, the interfaces of the positive electrode, the separator, and the negative electrode included in the laminate are partially melted and changed to a state where adhesion is easy, and then if pressurization is performed from the pressurizing portion, a laminate laminated with high adhesive strength can be obtained. The laminated laminate may comprise a semi-finished battery, that is, the laminated positive electrode, separator, and negative electrode.

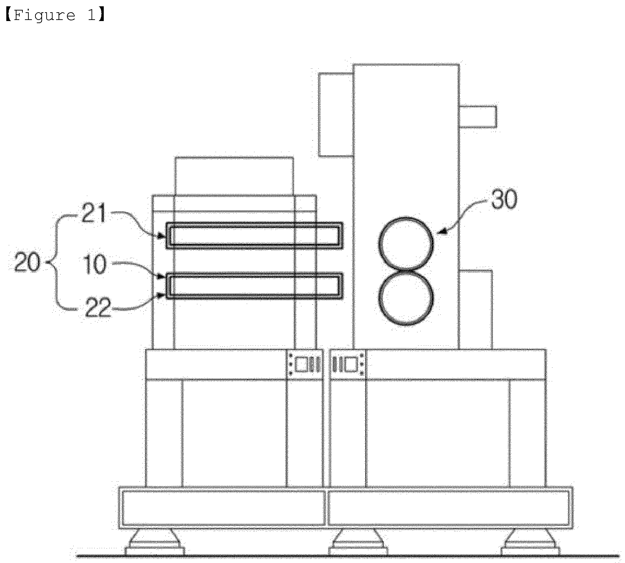

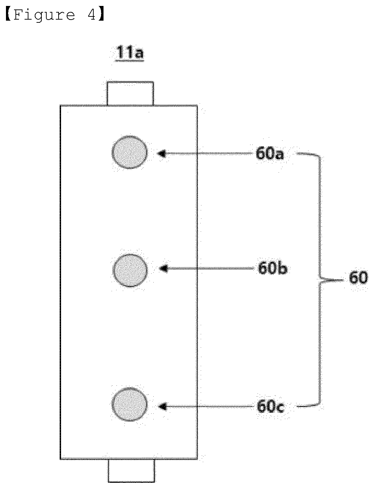

Hereinafter, with reference to FIGS. 1 to 4, the secondary battery lamination device according to the present invention will be described in more detail. FIGS. 1 to 4 correspond to an embodiment of the secondary battery lamination device, and the secondary battery lamination device according to the present invention is not limited by the drawings.

FIG. 1 shows a schematic diagram of a longitudinal cross-section of the secondary battery lamination device according to an embodiment of the present invention.

Referring to FIG. 1, the secondary battery lamination device 1 comprises the laminate moving portion 10 for moving the laminate 11 formed by sequentially stacking the positive electrode 11c, the separator 11b and the negative electrode 11a in one direction; the infrared LED (Light-Emitting Diode) heat source portion 20 which is positioned on one side and/or the other side of the laminate moving portion 10 and supplies infrared light to the laminate 11 to bond the positive electrode 11c, the separator 11b and the negative electrode 11a; and the pressurizing portion 30 for pressurizing the laminate 11 that has passed through the laminate moving portion 10. In this case, the one direction may mean a horizontal direction parallel to the laminate moving portion, and the one side and the other side may mean the upper portion and the lower portion.

According to the invention, the laminate moving portion 10 moves the laminate 11 in one direction, and supplies infrared light to the laminate 11 to bond the positive electrode 11c, the separator 11b, and the negative electrode 11a.

According to one embodiment, the laminate 11 may be a mono cell-type structure in which the separator 11b, the negative electrode 11a, the separator 11b, and a positive electrode 11c are sequentially stacked. In addition, it can be transformed into various forms such as the laminate mono cell as well as the bi-cell.

The laminate moving portion 10 may be in the form of a conveyor belt formed on a second infrared LED heat source portion 22. In this case, the conveyor belt generally refers to a belt-shaped device that continuously moves and/or transports objects, and is not particularly limited as long as it is a conveyor belt commonly used in the art. For example, the conveyor belt that can be applied to the laminate moving portion 10 may include a belt portion that is wound around a first roller and a second roller that are respectively disposed at both ends in the longitudinal direction to rotate. In this case, the longitudinal direction may mean one direction in which the laminate moves.

As the infrared LED heat source portion 20 to be described later is used, the length of the laminate moving portion 10 is shortened compared to when using a conventional heater, thereby increasing the process efficiency and reducing the equipment cost.

Since conventional general heaters apply heat to the laminate by convection, the temperature applied to the laminate may be non-uniform, and thus there was a problem that the quality of the lamination secondary battery had to be adjusted by increasing the surface temperature of the pressurizing portion roller. Since the size of the heater using convection is large, there is a problem that the length of the laminate moving portion 10 itself becomes long.

However, since the infrared LED heat source portion 20 directly applies heat to the laminate using a plurality of infrared LED lamps, it can apply heat to the laminate uniformly even if the length is shorter than that of the laminate moving portion 10 using a heater, and it is easy to control the output of individual infrared LED lamps, thereby facilitating the control of the quality.

For example, in the case of using the infrared LED heat source portion 20 as a heat source in the secondary battery lamination device 1, it is possible to shorten the length of the laminate moving portion 10 to about 50% to 60% or about 58.7% compared to when using a general heater.

According to the invention, the infrared LED (Light-Emitting Diode) heat source portion 20 supplies infrared light to the laminate 11, which is moved in one direction through the laminate moving portion 10, to bond the positive electrode 11c, the separator 11b, and the negative electrode 11a comprised in the laminate 11.

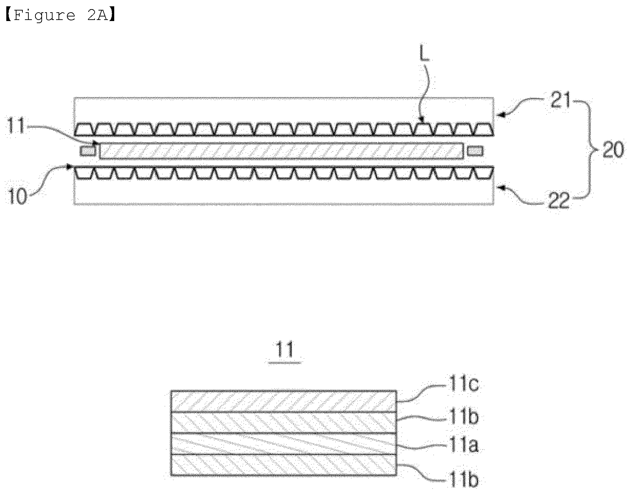

FIGS. 2A to 2C are schematic diagrams showing the structure of the infrared LED heat source portion according to one embodiment of the present invention and the arrangement form of the infrared LED lamps contained in the inside thereof.

Referring to FIG. 2A, the infrared LED heat source portion 20 comprises a first infrared LED heat source portion 21 that supplies infrared light from one side of the laminate 11 and the second infrared LED heat source portion 22 that supplies infrared light from the other side of the laminate 11. The first infrared LED heat source portion 21 is located above the laminate moving portion 10, and the second infrared LED heat source portion 22 is located below the laminate moving portion 10. The number and arrangement form of the plurality of infrared LED lamps included in the first infrared LED heat source portion 21 and the second infrared LED heat source portion 22 may be the same, and in this case, the laminate 11 can be bonded more uniformly, thereby improving the quality of the manufactured secondary battery. The laminate moving portion 10 may be adjacently formed on the second infrared LED heat source portion 22.

The infrared LED heat source portion 20 comprises a plurality of infrared LED lamps (L), and the plurality of infrared LED lamps (L) included in the first infrared LED heat source portion 21 and the second infrared LED heat source portion 22 are arranged symmetrically with respect to the laminate moving portion 10.

The plurality of infrared LED lamps (L) are individually operated. In this case, the individual operating may mean that lamps are individually turned on/off or that their output is individually regulated. Therefore, when the laminate 11 is moved by the laminate moving portion 10, the output of the infrared LED lamp (L) is individually controlled so that the laminate 11 is uniformly adhered and the uniformity of air permeability is improved, thereby improving the reliability of the quality of the manufactured electrode. In addition, due to the individual operating of the plurality of infrared LED lamps (L), the maintenance time of the secondary battery lamination device can also be shortened.

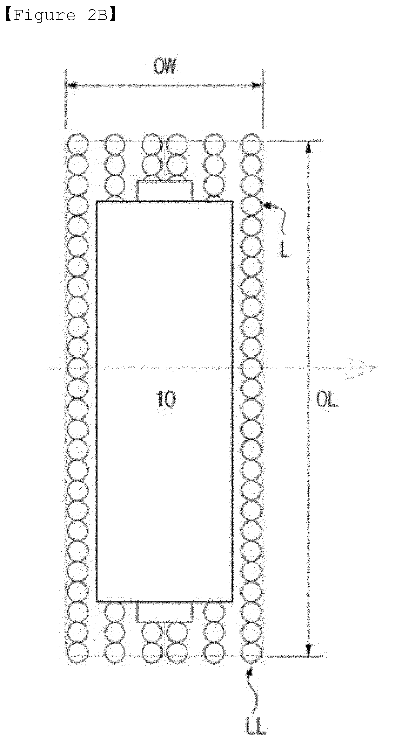

FIG. 2B shows an example of an arrangement form of the infrared LED lamps (L) arranged in the second infrared LED heat source portion 22. The first infrared LED heat source portion 21 may also have the same shape.

The infrared LED lamps(L) may be arranged adjacent to each other in a line in the laminate moving portion 10 in a direction perpendicular to the laminate moving direction (→). The infrared LED lamps (L) arranged in a line like this are called a LED line (LL), and a plurality of LED lines (LL) may be arranged in a direction parallel to the laminate moving direction (→), and a plurality of LED lines (LL) may be arranged adjacent or spaced apart from each other at regular intervals.

For example, the total number of LED lamps (L) comprised in the array in which the number of infrared LED lamps (L) arranged adjacently in one LED line (LL) is a (wherein, a is an integer greater than or equal to 1) and the number of the arranged LED lines (LL) is b (wherein, b is an integer greater than or equal to 1) may be n (wherein, n = a x b). At this time, the longitudinal length of the array comprising the n LED lamps (L) is called an overall length (OL) and the lateral length is called an overall width (OW).

When such an arrangement of the LED lamps (L) is referred to as one set, the first infrared LED heat source portion 21 may comprise an arrangement of 1 set or more or 1 to 5 sets of infrared LED lamps.

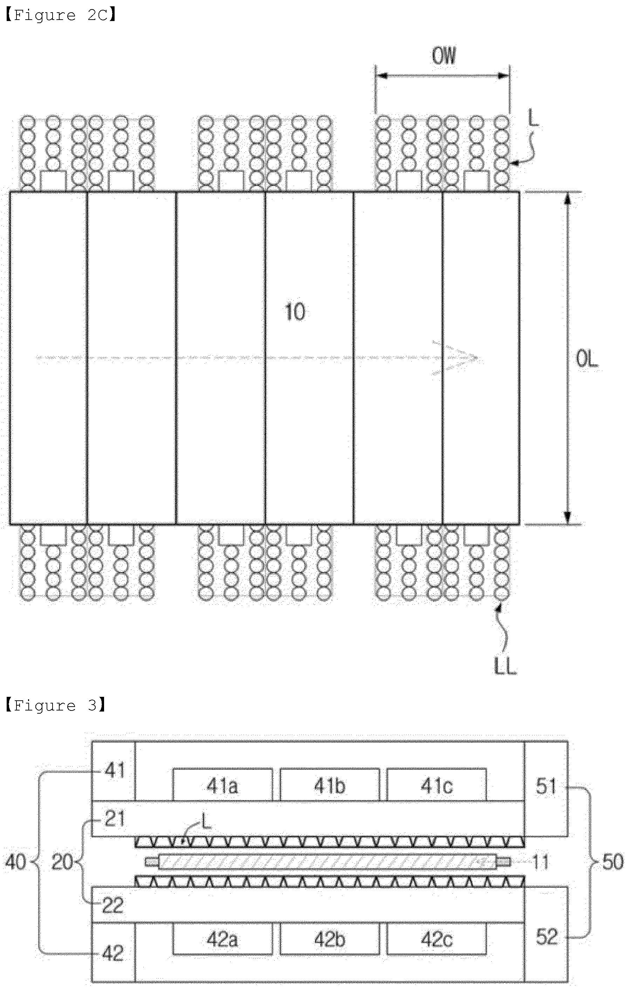

Figure 2C shows a shape in which a plurality of laminates 10 are transferred in one direction (→) on the second infrared LED heat source portion 22 comprising three sets (#1, #2, #3) of arrangements comprising the n infrared LED lamps (L).

In one aspect of the present disclosure, the pressurizing portion 30 may include a lamination roller 31. The lamination roller 31 may pressurize the laminate 11 that has passed through the laminate moving portion 10 to obtain a battery. The lamination roller 31 includes a pair of rollers and means rollers capable of laminating laminates passing between the pair of rollers. The lamination roller 31 may be used without limitation as long as it is commonly used rollers in the art.

At this time, the pressure applied to the laminate 11 that has passed through the laminate moving portion 10 is not particularly limited as long as the pressure is sufficient to manufacture a secondary battery by bonding the laminate 11. For example, the pressure of about 900 to 1000 kg may be applied by appropriately adjusting the pressurization pressure in consideration of the adhesive strength, the air permeability, and the process efficiency of the secondary battery.

FIG. 3 is a schematic diagram of a longitudinal cross-section of the secondary battery lamination device according to another embodiment of the present invention.

Referring to FIG. 3, the secondary battery lamination device 1 comprises the laminate moving portion 10 for moving the laminate 11 formed by sequentially stacking the positive electrode 11c, the separator 11b and the negative electrode 11a in one direction; the infrared LED heat source portion 20 which is positioned on one side or the other side of the laminate moving portion 10 and supplies infrared light to the laminate 11 to bond the positive electrode 11c, the separator 11b and the negative electrode 11a; and the pressurizing portion (not shown) for pressurizing the laminate 11 that has passed through the laminate moving portion 10.

In addition, the secondary battery lamination device 1 comprises fan sheets 40 comprising the upper fan sheet 41 and the lower fan sheet 42 formed adjacent to the first infrared LED heat source portion 21 and the second infrared LED heat source portion 22. The upper fan sheet 41 and the lower fan sheet 42 comprises a plurality of fans 41a, 41b, 41c, 42a, 42b, and 42c, respectively. The plurality of fans 41a, 41b, 41c, 42a, 42b, and 42c may cool the infrared LED heat source portion 20 to prevent overheating. Since the fan sheet 40 is for cooling the infrared LED heat source portion 20, the fan sheet 40 may be coupled to the infrared LED heat source portion 20 without being spaced apart or may be spaced apart from the infrared LED heat source portion 20 by a predetermined interval or less to exhibit a cooling effect.

In addition, the secondary battery lamination device 1 comprises an electronic box 50 which comprises a control portion for controlling the operation of each component comprising the laminate moving portion 10, the infrared LED heat source portion 20, the pressurizing portion (not shown) and the fan sheet 40 as described above. The electronic box 50 comprises the upper electronic box 51 and the lower electronic box 52, and the upper electronic box 51 may be formed adjacent to the first infrared LED heat source portion 21 and the upper fan sheet 41, and the lower electronic box 52 may be formed to be spaced apart from or coupled to the second infrared LED heat source portion 22 and the lower fan sheet 42.

A secondary battery in the form of a semi-finished product may be manufactured using the secondary battery lamination device according to the present invention. The battery in the form of the semi-finished product may include a positive electrode, a separator and a negative electrode.

Since the secondary battery lamination device can control the operation of individual infrared LED lamps by using the infrared LED heat source portion, the maintenance of the infrared LED heat source portion is easy, and the adhesive strength and the air permeability between the positive electrode, the separator and the positive electrode included in the battery can be improved.

In addition, the infrared LED heat source portion may improve the lamination efficiency of the electrode laminate by the heat source portion having a relatively short length, as compared to the heat source portion where a general heater is installed, thereby reducing the equipment cost.

In addition, the infrared LED lamp comprised in the infrared LED heat source portion can be easily replaced and used for a long period of time, thereby improving the process efficiency and reducing the equipment cost.

For example, if the temperature sensed through the first temperature detection sensor connection portion 60a of the positive electrode 11a is low, the output of the corresponding individual infrared LED lamp can be controlled to raise the temperature of the first temperature detection sensor connection portion 60a.

As described above, the secondary battery lamination device according to the present invention has the advantage of being able to independently control the output of individual infrared LED lamps by sensing the temperature of the laminate in real time.

**[Description of Symbol]**

| | | | |
|---|---|---|---|
| 1: | Secondary battery lamination device | | |
| 10: | Laminate moving portion | | |
| 11: | Laminate | 11a: | Negative electrode |
| 11b: | Separator | 11c: | Positive electrode |
| 20: | Infrared LED heat source portion | | |
| 21: | First infrared LED heat source portion | | |
| 22: | Second infrared LED heat source portion | | |
| L: | infrared LED lamp | LL: | LED line |
| 30: | Pressurizing portion | 31: | Lamination roller |
| 40: | Fan sheet | | |
| 41: | Upper fan sheet | 42: | Lower fan sheet |
| 41a, 41b, 41c: | Upper fan | 42a, 42b, 42c: | Lower fan |
| 50: | Electronic box | | |
| 51: | Upper electronic box | 52: | Lower electronic box |
| 60: | Temperature sensor connection portion | | |
| 60a: | First temperature sensor connection portion | | |
| 60b: | Second temperature sensor connection portion | | |
| 60c: | Third temperature sensor connection portion | | |

## Claims

1. A secondary battery lamination device (1) using infrared lamps comprising:
a laminate moving portion (10) configured to move a laminate (11) in a first direction, the laminate (11) formed by sequentially stacking a positive electrode (11c), a separator (11b), and a negative electrode (11a);
an infrared LED (Light-Emitting Diode) heat source portion (20) positioned on a first side or the first side and a second side of the laminate moving portion (10) , the infrared LED heat source portion (20) configured to supply infrared light to the laminate (11) to bond the positive electrode (11c), the separator (11b), and the negative electrode (11a) to one another; and
a pressurizing portion (30) configured to apply a pressure to the laminate (11), the pressurizing portion (30) being disposed downstream of the infrared LED heat source portion (20) in the first direction,
wherein the infrared LED heat source portion (20) comprises a first infrared LED heat source portion (21) positioned on the first side of the laminate moving portion (10) and a second infrared LED heat source portion (22) positioned on the second side of the laminate moving portion (10),
wherein the first infrared LED heat source portion (21) and the second infrared LED heat source portion (22) each comprise a respective plurality of infrared LED lamps (L) arranged symmetrically based on a centerline of the laminate moving portion (10), and
wherein the infrared LED lamps (L) of each of the first and second LED heat source portions (21, 22) are operated individually.

2. The secondary battery lamination device (1) according to claim 1, wherein the laminate moving portion (10) is in the form of a conveyor belt.

3. The secondary battery lamination device (1) according to claim 1, wherein with respect to the plurality of infrared LED lamps (L) of each of the first and second infrared LED heat source portions (21, 22), when an array of matrix form (a * b) having a vertically and b horizontally is defined as one set, 1 to 5 sets of the LED lamps (L) are disposed in each of the first and second infrared LED heat source portions (21, 22).

4. The secondary battery lamination device (1) according to claim 1, wherein the pressurizing portion (30) comprises a roller.

5. The secondary battery lamination device (1) according to claim 1, wherein the pressurizing portion (30) is configured to apply the pressure to the laminate of 900 to 1000 kg.

6. The secondary battery lamination device (1) according to claim 1, further comprising a fan sheet (40) disposed adjacent to the infrared LED heat source portion (20), the fan sheet (40) comprising a plurality of fans.

7. The secondary battery lamination device (1) according to claim 1, further comprising an electronic box (50) having a control portion configured to control operation of the laminate moving portion (10), the infrared LED heat source portion (20), and the pressurizing portion (30).

8. The secondary battery lamination device (1) according to claim 1, further comprising a temperature sensor configured to be connected to the positive electrode and/or the negative electrode.

## Patentansprüche

1. Laminierungsvorrichtung für Sekundärbatterien (1), die Infrarotlampen verwendet, umfassend:
einen Laminatbewegungsabschnitt (10), der konfiguriert ist, um ein Laminat (11) in einer ersten Richtung zu bewegen, wobei das Laminat (11) durch sequentielles Stapeln einer positiven Elektrode (11c), eines Separators (11b) und einer negativen Elektrode (11a) gebildet wird;
einen Infrarot-LED-(Leuchtdioden-)Wärmequellenabschnitt (20), der auf einer ersten Seite oder der ersten Seite und einer zweiten Seite des Laminatbewegungsabschnitts (10) positioniert ist, wobei der Infrarot-LED-Wärmequellenabschnitt (20) konfiguriert ist, um Infrarotlicht an das Laminat (11) zu liefern, um die positive Elektrode (11c), den Separator (11b) und die negative Elektrode (11a) miteinander zu verbinden; und
einen Druckbeaufschlagungsabschnitt (30), der konfiguriert ist, um einen Druck auf das Laminat (11) auszuüben, wobei der Druckbeaufschlagungsabschnitt (30) stromabwärts des Infrarot-LED-Wärmequellenabschnitts (20) in der ersten Richtung angeordnet ist,
wobei der Infrarot-LED-Wärmequellenabschnitt (20) einen ersten Infrarot-LED-Wärmequellenabschnitt (21), der auf der ersten Seite des Laminatbewegungsabschnitts (10) positioniert ist, und einen zweiten Infrarot-LED-Wärmequellenabschnitt (22), der auf der zweiten Seite des Laminatbewegungsabschnitts (10) positioniert ist, umfasst,
wobei der erste Infrarot-LED-Wärmequellenabschnitt (21) und der zweite Infrarot-LED-Wärmequellenabschnitt (22) jeweils eine jeweilige Vielzahl von Infrarot-LED-Lampen (L) umfassen, die symmetrisch basierend auf einer Mittellinie des Laminatbewegungsabschnitts (10) angeordnet sind, und
wobei die Infrarot-LED-Lampen (L) von jedem der ersten und zweiten LED-Wärmequellenabschnitte (21, 22) einzeln betrieben werden.

2. Laminierungsvorrichtung für Sekundärbatterien (1) nach Anspruch 1, bei dem der Laminatbewegungsabschnitt (10) in der Form eines Förderbands vorliegt.

3. Laminierungsvorrichtung für Sekundärbatterien (1) nach Anspruch 1, bei der in Bezug auf die Vielzahl von Infrarot-LED-Lampen (L) von jedem der ersten und zweiten Infrarot-LED-Wärmequellenabschnitte (21, 22), wenn ein Array der Matrixform (a * b) mit a vertikal und b horizontal als ein Satz definiert ist, 1 bis 5 Sätze der LED-Lampen (L) in jedem der ersten und zweiten Infrarot-LED-Wärmequellenabschnitte (21, 22) angeordnet sind.

4. Laminierungsvorrichtung für Sekundärbatterien (1) nach Anspruch 1, bei der der Druckbeaufschlagungsabschnitt (30) eine Walze umfasst.

5. Laminierungsvorrichtung für Sekundärbatterien (1) nach Anspruch 1, bei der der Druckbeaufschlagungsabschnitt (30) konfiguriert ist, um den Druck auf das Laminat von 900 bis 1000 kg auszuüben.

6. Laminierungsvorrichtung für Sekundärbatterien (1) nach Anspruch 1, ferner umfassend eine Lüfterplatte (40), die benachbart zu dem Infrarot-LED-Wärmequellenabschnitt (20) angeordnet ist, wobei die Lüfterplatte (40) eine Vielzahl von Lüftern umfasst.

7. Laminierungsvorrichtung für Sekundärbatterien (1) nach Anspruch 1, ferner umfassend eine Elektronikbox (50) mit einem Steuerabschnitt, der konfiguriert ist, um den Betrieb des Laminatbewegungsabschnitts (10), des Infrarot-LED-Wärmequellenabschnitts (20) und des Druckbeaufschlagungsabschnitts (30) zu steuern.

8. Laminierungsvorrichtung für Sekundärbatterien (1) nach Anspruch 1, ferner umfassend einen Temperatursensor, der konfiguriert ist, um mit der positiven Elektrode und/oder der negativen Elektrode verbunden zu werden.

## Revendications

1. Dispositif de stratification de batterie secondaire (1) utilisant des lampes infrarouge, comprenant :
une partie de déplacement du stratifié (10) configurée pour déplacer un stratifié (11) dans une première direction, le stratifié (11) étant formé par l'empilement en séquence d'une électrode positive (11c), d'un séparateur (11b), et d'une électrode négative (11a) ;
une partie de source de chaleur à DEL (diode électroluminescente) infrarouge (20) positionnée sur un premier côté ou le premier côté et un deuxième côté de la partie de déplacement du stratifié (10), la partie de source de chaleur à DEL infrarouge (20) étant configurée pour fournir une lumière infrarouge au stratifié (11) afin de lier l'un à l'autre l'électrode positive (11c), le séparateur (11b), et l'électrode négative (11a) ; et
une partie de mise sous pression (30) configurée pour appliquer une pression sur le stratifié (11), la partie de mise sous pression (30) étant disposée en aval de la partie de source de chaleur à DEL infrarouge (20) dans la première direction,
la partie de source de chaleur à DEL infrarouge (20) comprenant une première partie de source de chaleur à DEL infrarouge (21) positionnée sur le premier côté de la partie de déplacement du stratifié (10), et une deuxième partie de source de chaleur à DEL infrarouge (22) positionnée sur le deuxième côté de la partie de déplacement du stratifié (10),
la première partie de source de chaleur à DEL infrarouge (21) et la deuxième partie de source de chaleur à DEL infrarouge (22) comprenant chacune une pluralité respective de lampes à DEL infrarouge (L) agencées symétriquement en fonction d'un axe de la partie de déplacement du stratifié (10), et
les lampes à DEL infrarouge (L) de chacune des première et deuxième parties de source de chaleur à DEL (21, 22) étant actionnées individuellement.

2. Dispositif de stratification de batterie secondaire (1) selon la revendication 1, la partie de déplacement du stratifié (10) se présentant sous forme d'une bande transporteuse.

3. Dispositif de stratification de batterie secondaire (1) selon la revendication 1, dans lequel, en ce qui concerne la pluralité de lampes à DEL infrarouge (L) de chacune des première et deuxième parties de source de chaleur à DEL infrarouge (21, 22), lorsqu'un réseau de forme matricielle (a * b), a verticalement et b horizontalement, est défini comme un ensemble, 1 à 5 jeux de lampes DEL (L) sont disposées dans chacune des première et deuxième parties de source de chaleur à DEL infrarouge (21, 22).

4. Dispositif de stratification de batterie secondaire (1) selon la revendication 1, la partie de mise sous pression (30) comprenant un rouleau.

5. Dispositif de stratification de batterie secondaire (1) selon la revendication 1, la partie de mise sous pression (30) étant configurée pour appliquer une pression de 900 à 1000 kg sur le stratifié.

6. Dispositif de stratification de batterie secondaire (1) selon la revendication 1, comprenant en outre une rangée de ventilateurs (40) disposée de façon adjacente à la partie de source de chaleur à DEL infrarouge (20), la rangée de ventilateurs (40) comprenant plusieurs ventilateurs.

7. Dispositif de stratification de batterie secondaire (1) selon la revendication 1, comprenant en outre une boîte électronique (50) dotée d'une partie de contrôle pour contrôler le fonctionnement de la partie de déplacement du stratifié (10), de la partie de source de chaleur à DEL infrarouge (20), et de la partie de mise sous pression (30).

8. Dispositif de stratification de batterie secondaire (1) selon la revendication 1, comprenant en outre un capteur de température configuré pour être connecté à l'électrode positive et/ou à l'électrode négative.
